# EUROPEAN PATENT SPECIFICATION

(11) **EP 3 521 178 B1**
(45) Date of publication and mention of the grant of the patent: **07.04.2021**
(21) Application number: 16917690.6
(22) Date of filing: 29.09.2016
(51) Int. Cl.: B64G 1/24, B64G 1/40, B64G 1/26

(54) **SATELLITE, AND SATELLITE PROPULSION METHOD**
SATELLIT UND SATELLITENANTRIEBSVERFAHREN
SATELLITE ET PROCÉDÉ DE PROPULSION DE SATELLITE

(43) Date of publication of application: 07.08.2019
(73) Proprietor: Mitsubishi Electric Corporation, Chiyoda-ku Tokyo 100-8310 (JP)
(72) Inventor: IZUMISAWA, Hisayoshi, Tokyo 100-8310 (JP); MISUMI, Tadashi, Tokyo 100-8310 (JP); TANAKA, Atsushi, Tokyo 100-8310 (JP); KAWAMURA, Shunichi, Tokyo 100-8310 (JP)
(74) Representative: Sajda, Wolf E.
(86) International application number: PCT/JP2016/078767
(87) International publication number: WO 2018/061138

(56) References cited:
- WO-A1-2016/128389
- WO-A1-2016/128389
- JP-A- H0 624 397
- JP-A- H09 317 560
- JP-A- 2016 084 817
- US-A1- 2009 166 476
- US-A1- 2014 361 123
- US-A1- 2014 361 123
- US-A1- 2014 361 124
- US-A1- 2014 361 124
- US-A1- 2016 167 810
- US-A1- 2016 176 545
- US-A1- 2016 176 545
- US-A1- 2016 207 640
- US-A1- 2016 207 640

## Description

### Technical Field

The present invention relates to an artificial satellite and a satellite propulsion method.

### Background Art

In order to obtain a larger thrust in an artificial satellite of an electric propulsion system, it is necessary to make as many as electric propulsion thrusters as possible perform firings.

However, when an odd number of the electric propulsion thrusters are simultaneously made to perform firings, momentum is produced around the center of gravity of the artificial satellite, so that the artificial satellite cannot be made to travel in a target travel direction.

Therefore, it is desired to avoid production of the momentum around the center of gravity of the artificial satellite even if the odd number of the electric propulsion thrusters have been simultaneously made to perform firings (see e.g. documents WO2016/128389A1).

Patent Literature 1 discloses a structure for enabling variable setting of dispositions of thrusters.

Patent Literature 1, however, does not disclose avoiding production of momentum around the center of gravity of an artificial satellite even if an odd number of the electric propulsion thrusters have been simultaneously made to perform firings.

Patent Literature 2 discloses alterations of thrust vectors when some of a plurality of electric propulsion thrusters lose functions, in order to suppress production of spurious torque.

### List of Citations

### Patent Literature

Patent Literature 1: JP H09-317560 A
Patent Literature 2: JP 2016-084817 A

### Summary of Invention

### Technical Problem

An object of the present invention is to avoid production of momentum around the center of gravity of an artificial satellite even if an odd number of electric propulsion thrusters have been simultaneously made to perform firings.

### Solution to Problem

An artificial satellite of the present invention includes a first thruster group constituted from a plurality of thrusters and a second thruster group constituted from a plurality of thrusters different from the plurality of thrusters in the first thruster group.

When a first operating number and a second operating number are different in the artificial satellite, a ratio between a first distance and a second distance becomes inverse to a ratio between the first operating number and the second operating number, the first operating number being the number of the thrusters in the first thruster group that are operated, the second operating number being the number of the thrusters in the second thruster group that are operated, the first distance being a distance in a first direction orthogonal to a travel direction and being a distance from the center of gravity of the satellite to the first thruster group, the second distance being a distance in a second direction opposite to the first direction and being a distance from the center of gravity of the satellite to the second thruster group.

### Advantageous Effects of Invention

According to the present invention, even if an odd number of the electric propulsion thrusters have been simultaneously made to perform firings, production of momentum around the center of gravity of the artificial satellite can be avoided.

### Brief Description of Drawings

- FIG. 1: is a schematic diagram of an artificial satellite 100 in a first embodiment.
- FIG. 2: is a configuration diagram of the artificial satellite 100 in the first embodiment.
- FIG. 3: is a diagram illustrating a state of the artificial satellite 100 in an equilibrium state in the first embodiment.
- FIG. 4: is a diagram illustrating a changing state of the artificial satellite 100 from the equilibrium state to a disequilibrium state, in the first embodiment.
- FIG. 5: is a diagram illustrating a changing state of the artificial satellite 100 from the disequilibrium state to the equilibrium state, in the first embodiment.
- FIG. 6: is another diagram illustrating a state of the artificial satellite 100 in the disequilibrium sate in the first embodiment.
- FIG. 7: is another diagram illustrating a changing state of the artificial satellite 100 from the equilibrium state to the disequilibrium state, in the first embodiment.
- FIG. 8: is another diagram illustrating a state of the artificial satellite 100 in the disequilibrium state, in the first embodiment.
- FIG. 9: is another diagram illustrating a state of the artificial satellite 100 in the disequilibrium state, in the first embodiment.

### Description of Embodiments

A same reference numeral is given to the same or mutually corresponding components in an embodiment and the drawings. Explanations of the components to which the same reference numeral is given will be suitably omitted or simplified.

### First Embodiment

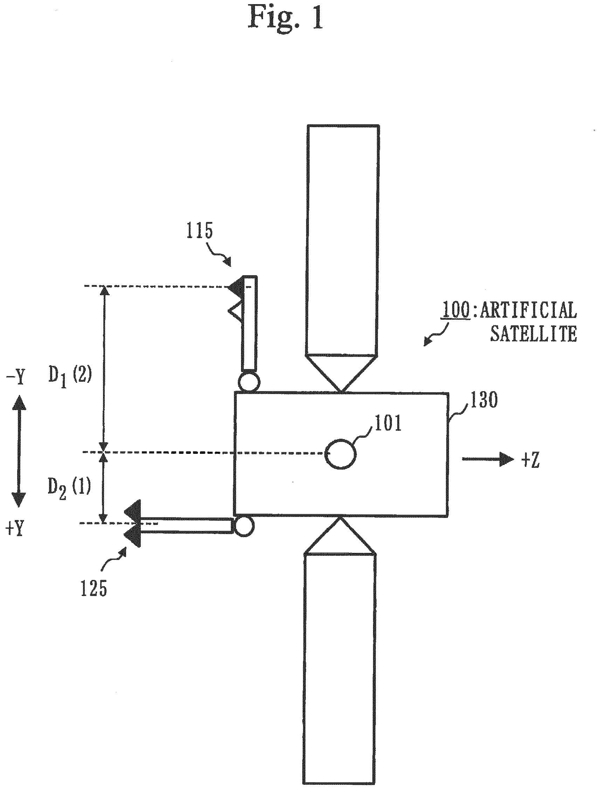

Based on Figs. 1 to 9, a description will be given about an embodiment where production of momentum around the center of gravity of an artificial satellite is avoided even if an odd number of electric propulsion thrusters have been simultaneously made to perform firings.

Unless otherwise specified, a thruster means an electric propulsion thruster.

### Overview of First Embodiment

An overview of a first embodiment will be described, based on FIG. 1.

The number of thrusters that are operated in a first thruster group 115 is referred to a first operating number. The number of thrusters that are operated in a second thruster group 125 is referred to a second operating number. The thrusters that are operated means thrusters that perform firings.

In the first thruster group 115 and the second thruster group 125, each black triangle indicates the thruster that is operating, and each white triangle indicates the thruster that is not operating.

A circle in the center of a satellite body 130 indicates a satellite gravity center 101. The satellite body 130 is the body of an artificial satellite 100. That is, the satellite body 130 is the body structure of the artificial satellite 100. The satellite gravity center 101 is the center of gravity of the artificial satellite 100. That is, the satellite gravity center 101 is the center of mass of the artificial satellite 100.

The first thruster group 115 and the second thruster group 125 are disposed so that, when the first operating number and the second operating number are different, a ratio between a first distance D₁ and a second distance D₂ becomes inverse to a ratio between the first operating number and the second operating number.

The first distance D₁ is a distance in a first direction (-Y) orthogonal to a travel direction (+Z), and is a distance from the satellite gravity center 101 to the first thruster group 115. Specifically, the first distance D₁ is the distance in the first direction (-Y) from the satellite gravity center 101 to the center of those of the thrusters in the first thruster group 115 that are operating.

The second distance D₂ is a distance in a second direction (+Y) opposite to the first direction (-Y), and is a distance from the satellite gravity center 101 to the second thruster group 125. Specifically, the second distance D₂ is the distance in the second direction (+Y) from the satellite gravity center 101 to the center of those of the thrusters in second thruster group 125 that are operating.

When the first operating number is one and the second operating number is two, a ratio between the first operating number and the second operating number becomes one to two.

In this case, a ratio between the first distance D₁ and the second distance D₂ becomes two to one.

### Description of Configuration

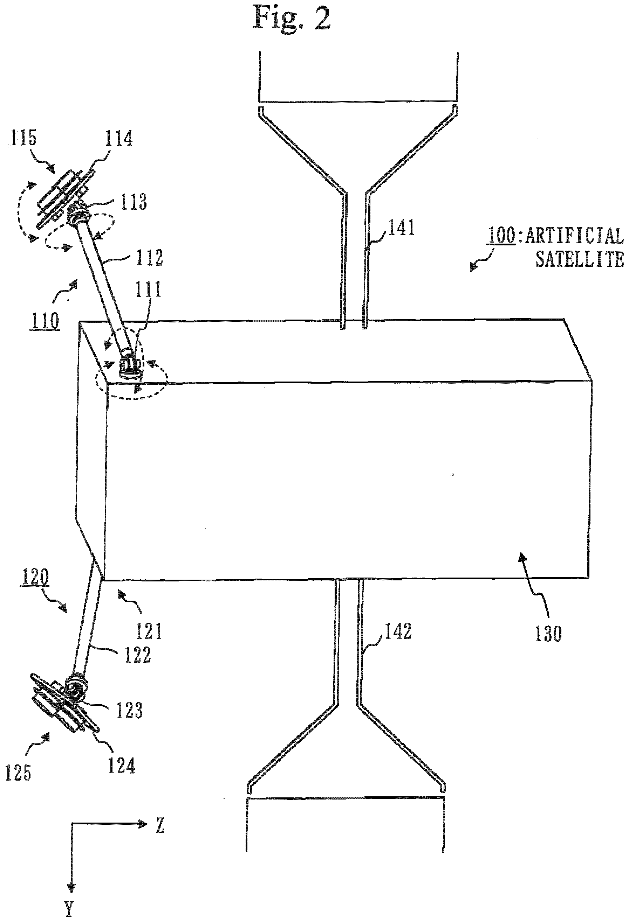

A configuration of the artificial satellite 100 will be described, based on FIG. 2.

The artificial satellite 100 includes the satellite body 130, two solar array wings (141, 142), two adjustment mechanisms (110, 120), and two thruster groups (115, 125).

The first adjustment mechanism 110 is mounted to a surface where the first solar array wing 141 is provided.

The first adjustment mechanism 110 is the one to adjust the first distance, with the first thruster group 115 mounted thereto.

The first adjustment mechanism 110 includes a first body-side gimbal 111, a first deployed boom 112, a first thruster-side gimbal 113, and a first thruster base 114.

The first body-side gimbal 111 is a gimbal to connect the first deployed boom 112 to the satellite body 130 and change a direction of the first deployed boom 112. Specifically, the first body-side gimbal 111 is a two-axis gimbal. A dotted-line direction indicates a rotation direction.

The first deployed boom 112 is a boom that has a shape of a rod. The first deployed boom 112 can be deployed at an arbitrary angle.

The first thruster-side gimbal 113 is a gimbal to connect the first thruster base 114 to the first deployed boom 112 and change a direction of the first thruster base 114. Specifically, the first thruster-side gimbal 113 is a two-axis gimbal. A dotted arrow indicates a rotation direction.

The first thruster base 114 is a base to which the first thruster group 115 is attached.

The first thruster group 115 is constituted from a plurality of the thrusters. In the first embodiment, the first thruster group 115 is constituted from two thrusters.

The second adjustment mechanism 120 is mounted to a surface where the second solar array wing 142 is provided.

The second adjustment mechanism 120 is the one to adjust the second distance, with the second thruster group 125 mounted thereto.

The second adjustment mechanism 120 includes a second body-side gimbal 121, a second deployed boom 122, a second thruster-side gimbal 123, and a second thruster base 124.

The second body-side gimbal 121 is a gimbal to connect the second deployed boom 122 to the satellite body 130 and change a direction of the second deployed boom 122. Specifically, the second body-side gimbal 121 is a two-axis gimbal.

The second deployed boom 122 is a boom that has a shape of a rod. The second deployed boom 122 can be deployed at an arbitrary angle.

The second thruster-side gimbal 123 is a gimbal to connect the second thruster base 124 to the second deployed boom 122 and change a direction of the second thruster base 124. Specifically, the second thruster-side gimbal 123 is a two-axis gimbal.

The second thruster base 124 is a base to which the second thruster group 125 is attached.

The second thruster group 125 is constituted from a plurality of the thrusters. In the first embodiment, the second thruster group 125 is constituted from two thrusters.

The first thruster group 115 and the second thruster group 125 use electric power that is generated by the first solar array wing 141 and the second solar array wing 142 as an energy source.

The upper limit of the number of the thrusters that can be operated is determined by the magnitude of the electric power that is generated by the first solar array wing 141 and the second solar array wing 142. The more the number of the thrusters that are operated is, a larger thrust can be obtained.

### Description of Operation

The operation of each of the first adjustment mechanism 110 and the second adjustment mechanism 120 correspond to a satellite propulsion method.

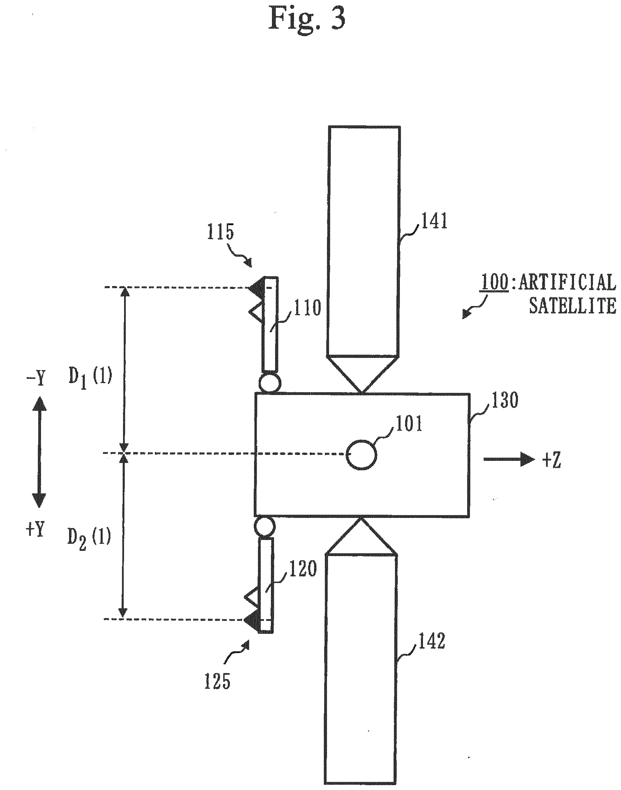

The satellite propulsion method will be described, based on Figs. 3, 4, and 5.

FIG. 3 illustrates an equilibrium state where the first operating number is the same as the second operating number.

Each of the first operating umber and the second operating number is one. That is, the ratio between the first operating number and the second operating number is one to one.

In the case of the equilibrium state, the first distance D₁ and the second distance D2 are equal. That is, the ratio between the first distance D₁ and the second distance D₂ is one to one.

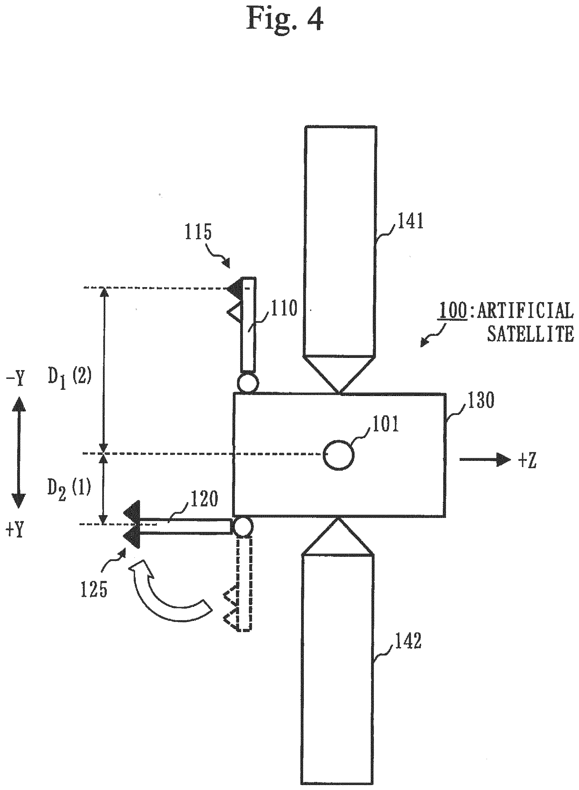

FIG. 4 illustrates a disequilibrium state where the first operating number and the second operating number are different.

The first operating number is one, and the second operating number is two. That is, the ratio between the first operating number and the second operating number is one to two.

When transition is made from the equilibrium state (refer to FIG. 3) to the disequilibrium state, at least one of the first distance D₁ and the second distance D₂ changes so that the ratio between the first distance D₁ and the second distance D2 becomes the inverse ratio of the ratio between the first operating number and the second operating number.

To take an example, the second adjustment mechanism 120 changes its direction. This changes the position of the second thruster group 125, so that the second distance D₂ becomes half. As a result, the ratio between the first distance D₁ and the second distance D₂ becomes two to one.

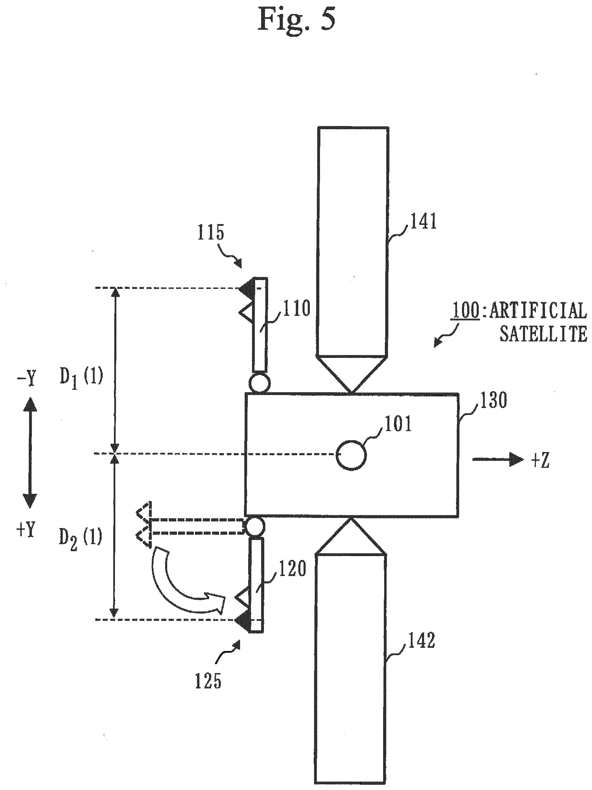

FIG. 5 illustrates the equilibrium state where the first operating number is the same as the second operating number.

The first operating number is one, and the second operating number is one. That is, the ratio between the first operating number and the second operating number is one to one.

When transition is made from the disequilibrium state (refer to FIG. 4) to the equilibrium state, at least one of the first distance D₁ and the second distance D₂ changes so that the first distance D₁ and the second distance D₂ become equal.

To take an example, the second adjustment mechanism 120 changes its direction. This changes the position of the second thruster group 125, so that the second distance D₂ becomes half. As a result, the ratio between the first distance D₁ and the second distance D₂ becomes one to one.

The first distance D₁ is adjusted by the first adjustment mechanism 110 and the second distance D₂ is adjusted by the second adjustment mechanism 120.

Specifically, a computer included in the artificial satellite 100 controls the first adjustment mechanism 110 and the second adjustment mechanism 120. Each of the controlled adjustment mechanisms changes the direction of the adjustment boom. That is, the body-side gimbal changes the direction of the adjustment boom. Further, the controlled adjustment mechanism changes the direction of the thruster base. That is, the thruster-side gimbal changes the direction of the thruster base. As a result, the thruster base is oriented in a direction opposite to the travel direction (+Z). This causes the thrusters that are operated to perform firings in the direction opposite to the travel direction. A thrust in the travel direction is thereby obtained, so that the artificial satellite 100 travels in the travel direction.

### Effects of First Embodiment

Even if the odd number of the electric propulsion thrusters have been simultaneously made to perform firings, production of momentum around the center of gravity of the artificial satellite 100 can be avoided.

Specifically, by adjusting the deployment angle of the deployed-type boom with the electric propulsion thrusters mounted thereto, simultaneous firings by the odd number of the electric propulsion thrusters have been made possible.

When the number of the electric propulsion thrusters is increased from two and a thrust for orbit transfer (orbit raising) is increased by simultaneous firings by the electric propulsion thrusters, the following respects need to be taken into consideration:
cost to be caused by an increase in the number of the electric propulsion thrusters that are mounted and electric power necessary for driving the electric propulsion thrusters; and
A chemical-propulsion engine referred to as an AKE (apogee kick engine) produces a large thrust. In the case of an artificial satellite using the chemical-propulsion engine, the chemical-propulsion engine is mounted on the surface on the opposite side of the earth oriented surface, so that a location where each electric propulsion thruster is mounted and a location where the chemical-propulsion engine is mounted contend.

Therefore, the restriction in mounting (area or the like) is produced when each electric propulsion thruster and the chemical-propulsion engine are mounted on the same satellite body structure surface (surface on the opposite side of the earth oriented surface) in the combined use of the electric propulsion system and the chemical propulsion system.

According to the first embodiment, a degree of freedom in combination in terms of design, where the total number of the electric propulsion thrusters (of the first thruster group 115 and the second thruster group 125) can be set to an odd number (2N + 1 thrusters; N being an integer not less than one) (e.g., three thrusters), is obtained. The cost and the necessary electric power can be thereby reduced more than in the case where four (2N + 2) electric propulsion thrusters are used together, and a thrust can be thereby increased more than in the case where two (2N) electric propulsion thrusters are used.

By mounting the electric propulsion thrusters to the satellite body structure surface of the artificial satellite 100 different from that for the chemical-propulsion engine via the booms (of the first deployed boom 112 and the second deployed boom 122), the need for invariably mounting the electric propulsion thrusters on the surface on the opposite side of the earth oriented surface is eliminated. Thus, it becomes possible to ease the restriction in the mounting in the combined use of the electric propulsion system and the chemical propulsion system.

### Alternative Configuration

Both of the first distance D₁ and the second distance D₂ may be changed in order to change the ratio between the first distance D₁ and the second distance D₂.

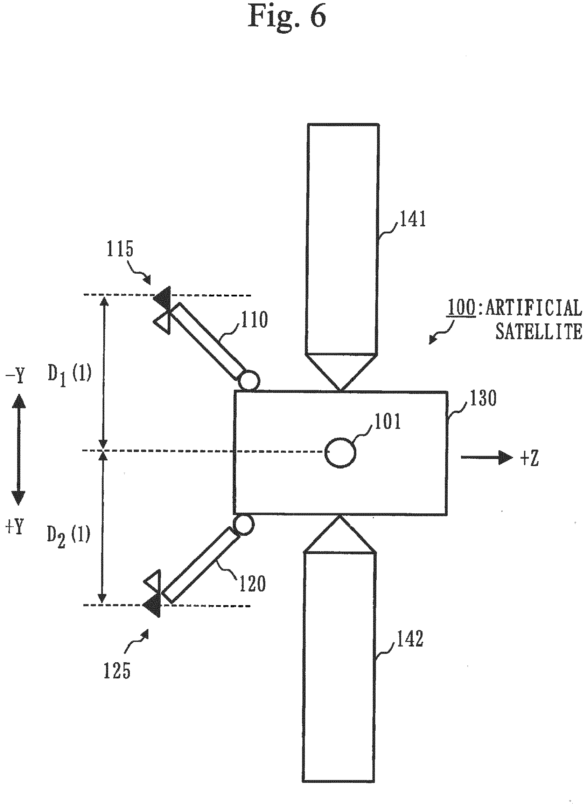

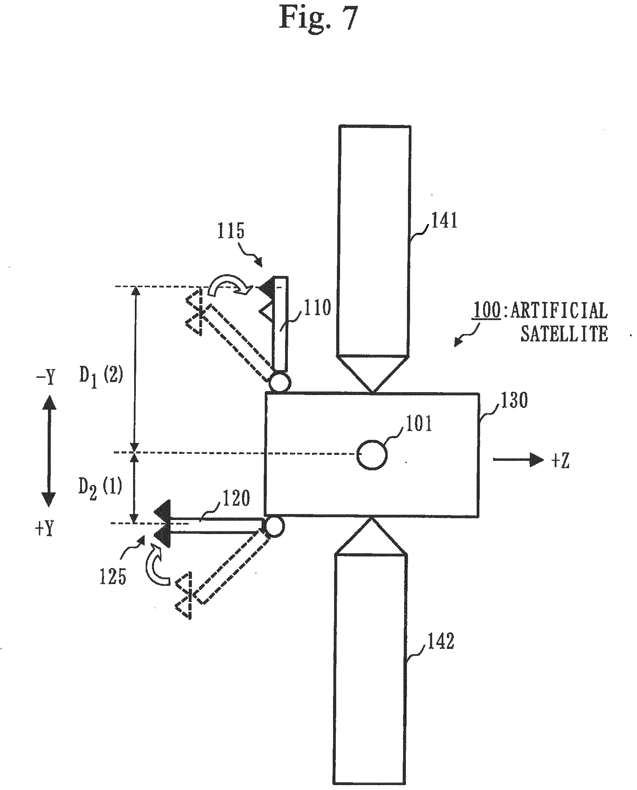

To take an example, the state of the artificial satellite 100 may be changed from the equilibrium state illustrated in FIG. 6 to the disequilibrium state illustrated in FIG. 7.

The number of the thrusters constituting each thruster group may be three or more.

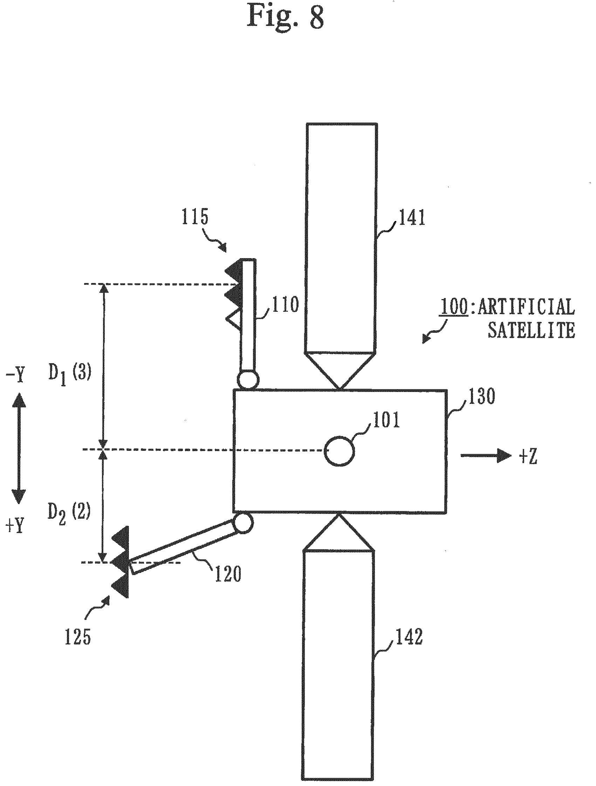

To take an example, the number of the thrusters constituting each thruster group may be three, as illustrated in FIG. 8. When the first operating number is two and the second operating number is three, the ratio between the first distance D₁ and the second distance D₂ becomes three to two because the radio between the first operating number and the second operating number is two to three.

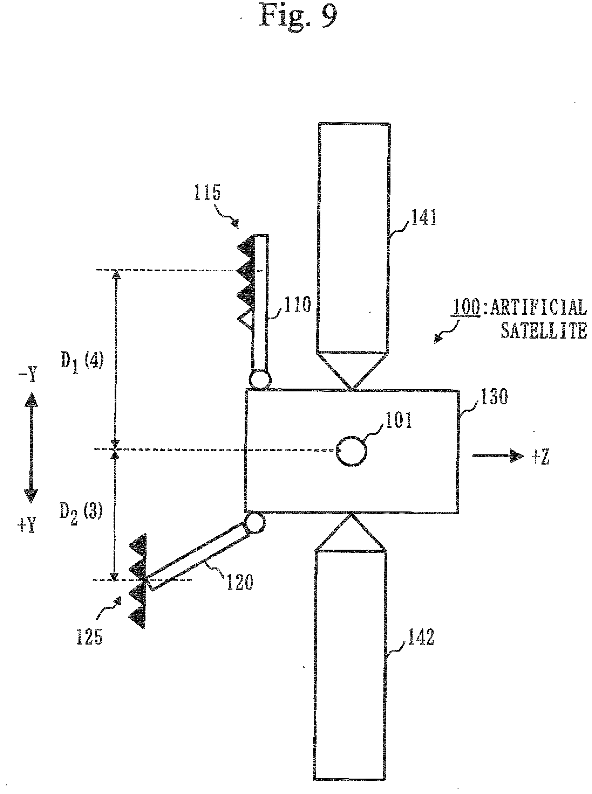

Alternatively, the number of the thrusters constituting each thruster group may be four, as illustrated in FIG. 9. When the first operating number is three and the second operating number is four, the ratio between the first distance D₁ and the second distance D₂ becomes four to three because the radio between the first operating number and the second operating number is three to four.

Further, the number of the thrusters in the first thruster group 115 and the number of the thrusters in the second thruster group 125 may be different.

Each of the first adjustment mechanism 110 and the second adjustment mechanism 120 does not need to have the structure illustrated in FIG. 2 if the first distance D₁ and the second distance D₂ can be adjusted.

To take an example, each of the first adjustment mechanism 110 and the second adjustment mechanism 120 may have the following structure.

A joint may be provided for each of the first deployed boom 112 and the second deployed boom 122, and each of the first deployed boom 112 and the second deployed boom 122 may be bent at the portion of the joint.

Each of the first deployed boom 112 and the second deployed boom 122 may have an extensible structure and may extend and contract.

Each gimbal may be a universal joint.

### Supplementation of Embodiment

The embodiment is an illustration of a preferred embodiment and does not intend to limit the technical scope of the present invention. The embodiment may be carried out in combination with a different embodiment.

### List of Reference Signs

- 100: artificial satellite
- 101: satellite gravity center
- 110: first adjustment mechanism
- 111: first body-side gimbal
- 112: first deployed boom
- 113: first thruster-side gimbal
- 114: first thruster base
- 115: first thruster group
- 120: second adjustment mechanism
- 121: second body-side gimbal
- 122: second deployed boom
- 123: second thruster-side gimbal
- 124: second thruster base
- 125: second thruster group
- 130: satellite body
- 141: first solar array wing
- 142: second solar array wing

## Claims

1. An artificial satellite (100) including a first thruster group (115) comprising a plurality of thrusters and a second thruster group (125) comprising a plurality of thrusters different from the plurality of thrusters in the first thruster group, wherein the first thruster group (115) and the second thruster group (125) simultaneously perform firings in a direction opposite to a travel direction of the artificial satellite (100) when orbit transfer is performed, **characterised in that**: when a first operating number and a second operating number are different, a ratio between a first distance and a second distance becomes inverse to a ratio between the first operating number and the second operating number, the first operating number being a number of the thrusters in the first thruster group (115) that are operated, the second operating number being a number of the thrusters in the second thruster group (125) that are operated, the first distance being a distance in a first direction orthogonal to the travel direction and being a distance from a center of gravity of the satellite to the first thruster group (115), the second distance being a distance in a second direction opposite to the first direction and being a distance from the center of gravity of the satellite to the second thruster group (125).

2. The artificial satellite (100) according to claim 1,
comprising:
- a first adjustment mechanism (110) to adjust the first distance, with the first thruster group (115) mounted thereto; and
- a second adjustment mechanism (120) to adjust the second distance, with the second thruster group (125) mounted thereto.

3. The artificial satellite (100) according to claim 2,
wherein the first adjustment mechanism (110) includes:
- a first deployed boom (112) having a shape of a rod;
- a first body-side gimbal (111) to connect the first deployed boom (112) to a satellite body (130) and change a direction of the first deployed boom;
- a first thruster base (114) with the first thruster group (115) attached thereto; and
- a first thruster-side gimbal (113) to connect the first thruster base (114) to the first deployed boom (112) and change a direction of the first thruster base, wherein the second adjustment mechanism (120) includes:
- a second deployed boom (122) having a shape of a rod;
- a second body-side gimbal (121) to connect the second deployed boom (122) to the satellite body (130) and change a direction of the second deployed boom;
- a second thruster base (124) with the second thruster group (125) attached thereto; and
- a second thruster-side gimbal (123) to connect the second thruster base (124) to the second deployed boom (122) and change a direction of the second thruster base.

4. The artificial satellite (100) according to any one of claims 1 to 3,
wherein when the first operating number and the second operating number are the same, the first distance and the second distance are equal, and
wherein when transition is made from an equilibrium state where the first operating number and the second operating number are the same to a disequilibrium state where the first operating number and the second operating number are different, at least one of the first distance and the second distance changes so that the ratio between the first distance and the second distance becomes an inverse ratio of the ratio between the first operating number and the second operating number.

5. The artificial satellite (100) according to claim 4,
wherein when transition is made from the disequilibrium state to the equilibrium state, at least one of the first distance and the second distance changes so that the first distance and the second distance become equal.

6. A satellite propulsion method of giving a thrust to an artificial satellite (100), using a first thruster group (115) and a second thruster group (125), wherein when a first operating number and a second operating number are different, a first adjustment mechanism (110) adjusts a first distance and a second adjustment mechanism (120) adjust a second distance so that a ratio between the first distance and the second distance becomes inverse to a ratio between the first operating number and the second operating number, the first operating number being a number of thrusters in the first thruster group (115) that are mounted to the first adjustment mechanism and are operated, the second operating number being a number of thrusters in the second thruster group (125) that are mounted to the second adjustment mechanism (120) and are operated, the first distance being a distance in a first direction orthogonal to a travel direction and being a distance from a center of gravity of the satellite to the first thruster group (115), the second distance being a distance in a second direction opposite to the first direction and being a distance from the center of gravity of the satellite to the second thruster group (125).

7. The satellite propulsion method according to claim 6,
wherein when the first operating number and the second operating number are the same, the first distance and the second distance are equal, and
wherein when transition is made from an equilibrium state where the first operating number and the second operating number are the same to a disequilibrium state where the first operating number and the second operating number are different, at least one of the first distance and the second distance changes so that the ratio between the first distance and the second distance becomes an inverse ratio of the ratio between the first operating number and the second operating number.

8. The satellite propulsion method according to claim 7,
wherein when transition is made from the disequilibrium state to the equilibrium state, at least one of the first distance and the second distance changes so that the first distance and the second distance become equal.

## Patentansprüche

1. Künstlicher Satellit (100) der Folgendes aufweist:
eine erste Triebwerksgruppe (115), die eine Vielzahl von Triebwerken aufweist, und eine zweite Triebwerksgruppe (125), die eine Vielzahl von Triebwerken aufweist, die andere Triebwerke sind, als die Triebwerke der ersten Triebwerksgruppe,
wobei die erste Triebwerksgruppe (115) und die zweite Triebwerksgruppe (125) gleichzeitig Schubfeuerungen in einer Richtung ausführen, die entgegengesetzt zu der Bewegungsrichtung des künstlichen Satelliten (100) ist, wenn ein Orbittransfer ausgeführt wird,
**dadurch gekennzeichnet,**
**dass** dann, wenn sich eine erste Betriebsnummer und eine zweite Betriebsnummer unterscheiden, das Verhältnis zwischen einer ersten Distanz und einer zweiten Distanz invers zu dem Verhältnis zwischen der ersten Betriebsnummer und der zweiten Betriebsnummer wird, wobei die erste Betriebsnummer die Anzahl der Triebwerke der ersten Triebwerksgruppe (115) ist, die betrieben werden, und wobei die zweite Betriebsnummer die Anzahl der Triebwerke der zweiten Triebwerksgruppe (125) ist, die betrieben werden, und wobei die erste Distanz eine Distanz in einer ersten Richtung orthogonal zu der Bewegungsrichtung ist und eine Distanz von dem Schwerpunkt des Satelliten zu der ersten Triebwerksgruppe (115) ist, und wobei die zweite Distanz eine Distanz in einer zweiten Richtung ist, die der ersten Richtung entgegengesetzt ist und eine Distanz von dem Schwerpunkt des Satelliten zu der zweiten Triebwerksgruppe (125) ist.

2. Künstlicher Satellit (100) nach Anspruch 1,
der Folgendes aufweist:
einen ersten Einstellmechanismus (110), um die erste Distanz mit der ersten Triebwerksgruppe (115) einzustellen, die daran montiert ist; und
einen zweiten Einstellmechanismus (120), um die zweite Distanz mit der zweiten Triebwerksgruppe (125) einzustellen, die daran montiert ist.

3. Künstlicher Satellit (100) nach Anspruch 2,
wobei der erste Einstellmechanismus (110) Folgendes aufweist:
- einen ersten ausgefahrenen Ausleger (112), der die Form eines Stabes aufweist; und
- eine erste körperseitige kardanische Aufhängung (111), um den ersten ausgefahrenen Ausleger (112) mit einem Satellitenkörper (130) zu verbinden und um die Richtung des ersten ausgefahrenen Auslegers zu ändern; und
- eine erste Triebwerksbasis (114), an der die erste Triebwerksgruppe (115) montiert ist; und
- eine erste triebwerksseitige kardanische Aufhängung (113), um die erste Triebwerksbasis (114) mit dem ersten ausgefahrenen Ausleger (112) zu verbinden und um die Richtung der ersten Triebwerksbasis zu ändern,
und wobei der zweite Einstellmechanismus (120) Folgendes aufweist,
- einen zweiten ausgefahrenen Ausleger (122), der die Form eines Stabes aufweist; und
- eine zweite körperseitige kardanische Aufhängung (121), um den zweiten ausgefahrenen Ausleger (122) mit dem Satellitenkörper (130) zu verbinden und um die Richtung des zweiten ausgefahrenen Auslegers zu ändern; und
- eine zweite Triebwerksbasis (124), an der die zweite Triebwerksgruppe (115) montiert ist; und
- eine zweite triebwerksseitige kardanische Aufhängung (123), um die zweite Triebwerksbasis (124) mit dem zweiten ausgefahrenen Ausleger (122) zu verbinden und um die Richtung der zweiten Triebwerksbasis zu ändern.

4. Künstlicher Satellit (100) nach einem der Ansprüche 1 bis 3,
wobei dann, wenn die erste Betriebsnummer und die zweite Betriebsnummer gleich sind, die erste Distanz und die zweite Distanz gleich sind, und wobei dann, wenn ein Übergang vorgenommen wird von einem Gleichgewichtszustand, in dem die erste Betriebsnummer und die zweite Betriebsnummer gleich sind, in einen Ungleichgewichtszustand, in dem die erste Betriebsnummer und die zweite Betriebsnummer verschieden sind, zumindest eine von der ersten Distanz und der zweiten Distanz sich ändert, derart, dass das Verhältnis zwischen der ersten Distanz und der zweiten Distanz ein inverses Verhältnis zu dem Verhältnis zwischen der ersten Betriebsnummer und der zweiten Betriebsnummer wird.

5. Künstlicher Satellit (100) nach Anspruch 4,
wobei dann, wenn der Übergang von dem Ungleichgewichtszustand in den Gleichgewichtszustand vorgenommen wird, zumindest eine von der ersten Distanz und der zweiten Distanz sich ändert, derart, dass die erste Distanz und die zweite Distanz gleich werden.

6. Satellitenantriebsverfahren um Schub auf einen künstlichen Satelliten (100) zu übertragen, unter Verwendung einer ersten Triebwerksgruppe (115) und einer zweiten Triebwerksgruppe (125), wobei dann, wenn eine erste Betriebsnummer und eine zweite Betriebsnummer verschieden sind, ein erster Einstellmechanismus (110) eine erste Distanz einstellt, und ein zweiter Einstellmechanismus (120) eine zweite Distanz einstellt, derart, dass das Verhältnis zwischen der ersten Distanz und der zweiten Distanz ein Inverses zu dem Verhältnis zwischen der ersten Betriebsnummer und der zweiten Betriebsnummer wird, wobei die erste Betriebsnummer die Anzahl der Triebwerke in der ersten Triebwerksgruppe (115) ist, die an dem ersten Einstellmechanismus montiert sind und die betrieben werden, und wobei die zweite Betriebsnummer die Anzahl der Triebwerke in der zweiten Triebwerksgruppe (125) ist, die an dem zweiten Einstellmechanismus montiert sind und die betrieben werden, und wobei die erste Distanz eine Distanz in einer ersten Richtung orthogonal zu der Bewegungsrichtung ist und eine Distanz von dem Schwerpunkt des Satelliten zu der ersten Triebwerksgruppe ist, und wobei die zweite Distanz eine Distanz in einer zweiten Richtung ist, die der ersten Richtung entgegengesetzt ist und eine Distanz von dem Schwerpunkt des Satelliten zu der zweiten Triebwerksgruppe (125) ist.

7. Satellitenantriebsverfahren nach Anspruch 6,
wobei dann, wenn die erste Betriebsnummer und die zweite Betriebsnummer gleich sind, die erste Distanz und die zweite Distanz gleich sind, und wobei dann, wenn ein Übergang vorgenommen wird von einem Gleichgewichtszustand, in dem die erste Betriebsnummer und die zweite Betriebsnummer gleich sind, in einen Ungleichgewichtszustand, in dem die erste Betriebsnummer und die zweite Betriebsnummer verschieden sind, zumindest eine von der ersten Distanz und der zweiten Distanz sich ändert, derart, dass das Verhältnis zwischen der ersten Distanz und der zweiten Distanz ein inverses Verhältnis zu dem Verhältnis zwischen der ersten Betriebsnummer und der zweiten Betriebsnummer wird.

8. Satellitenantriebsverfahren nach Anspruch 7,
wobei dann, wenn der Übergang von dem Ungleichgewichtszustand in den Gleichgewichtszustand vorgenommen wird, zumindest eine von der ersten Distanz und der zweiten Distanz sich derart ändert, dass die erste Distanz und die zweite Distanz gleich werden.

## Revendications

1. Satellite artificiel (100) incluant un premier groupe de propulseurs (115) comprenant une pluralité de propulseurs et un second groupe de propulseurs (125) comprenant une pluralité de propulseurs différents de la pluralité de propulseurs dans le premier groupe de propulseurs,
dans lequel le premier groupe de propulseurs (115) et le second groupe de propulseurs (125) exécutent simultanément des salves dans une direction opposée à une direction de déplacement du satellite artificiel (100) quand un transfert d'orbite est exécuté,
**caractérisé en ce que** :
quand un premier nombre opérationnel et un second nombre opérationnel sont différents, un rapport entre une première distance et une seconde distance devient inverse à un rapport entre le premier nombre opérationnel et le second nombre opérationnel, le premier nombre opérationnel étant un nombre de propulseurs dans le premier groupe de propulseurs (115) qui sont mis en fonctionnement, le second nombre opérationnel étant un nombre de propulseurs dans le second groupe de propulseurs (125) qui sont mis en fonctionnement, la première distance étant une distance dans une première direction orthogonale à la direction de déplacement et étant une distance depuis un centre de gravité du satellite jusqu'au premier groupe de propulseurs (115), la seconde distance étant une distance dans une seconde direction opposée à la première direction et étant une distance depuis le centre de gravité du satellite jusqu'au second groupe de propulseurs (125).

2. Satellite artificiel (100) selon la revendication 1,
comprenant :
- un premier mécanisme d'ajustage (110) pour ajuster la première distance, avec le premier groupe de propulseurs (115) montés sur celui-ci ; et
- un second mécanisme d'ajustage (120) pour ajuster la seconde distance, avec le second groupe de propulseurs (125) montés sur celui-ci.

3. Satellite artificiel (100) selon la revendication 2,
dans lequel le premier mécanisme d'ajustage (110) inclut :
- un premier bras déployé (112) ayant une forme de tige ;
- un premier cardan côté corps (111) pour connecter le premier bras déployé (112) à un corps de satellite (130) et pour changer une direction du premier bras déployé ;
- une première base de propulseurs (114) avec le premier groupe de propulseurs (115) fixé à celle-ci ; et
- un premier cardan côté propulseurs (113) pour connecter la première base de propulseurs (114) au premier bras déployé (112) et pour changer une direction de la première base de propulseurs,
dans lequel le second mécanisme d'ajustage (120) inclut :
- un second bras déployé (122) ayant une forme de tige ;
- un second cardan côté corps (121) pour connecter le second bras déployé (122) au corps de satellite (130) et pour changer une direction du second bras déployé ;
- une seconde base de propulseurs (124) avec le second groupe de propulseurs (125) fixé à celle-ci ; et
- un second cardan côté propulseurs (123) pour connecter la seconde base de propulseurs (124) au second bras déployé (122) et pour changer une direction de la seconde base de propulseurs.

4. Satellite artificiel (100) selon l'une quelconque des revendications 1 à 3, dans lequel, quand le premier nombre opérationnel et le second nombre opérationnel sont identiques, la première distance et la seconde distance sont égales, et
dans lequel, quand une transition est réalisée depuis un état d'équilibre dans lequel le premier nombre opérationnel et le second nombre opérationnel sont identiques jusqu'à un état de déséquilibre dans lequel le premier nombre opérationnel et le second nombre opérationnel sont différents, au moins une distance parmi la première distance et la seconde distance change de sorte que le rapport entre la première distance et la seconde distance devient un rapport inverse du rapport entre le premier nombre opérationnel et le second nombre opérationnel.

5. Satellite artificiel (100) selon la revendication 4,
dans lequel, quand une transition est réalisée depuis l'état de déséquilibre jusqu'à l'état d'équilibre, au moins une distance parmi la première distance et la seconde distance change de sorte que la première distance et la seconde distance deviennent égales.

6. Procédé de propulsion de satellite consistant à appliquer une propulsion à un satellite artificiel (100), en utilisant un premier groupe de propulseurs (115) et un second groupe de propulseurs (125),
dans lequel, quand un premier nombre opérationnel et un second nombre opérationnel sont différents, un premier mécanisme d'ajustage (110) ajuste une première distance et un second mécanisme d'ajustage (120) ajuste une seconde distance de sorte qu'un rapport entre la première distance et la seconde distance devient inverse à un rapport entre le premier nombre opérationnel et le second nombre opérationnel, le premier nombre opérationnel étant un nombre de propulseurs dans le premier groupe de propulseurs (115) qui sont montés sur le premier mécanisme d'ajustage et qui sont mis en fonctionnement, le second nombre opérationnel étant un nombre de propulseurs dans le second groupe de propulseurs (125) qui sont montés sur le second mécanisme d'ajustage (120) et qui sont mis en fonctionnement, la première distance étant une distance dans une première direction orthogonale à une direction de déplacement et étant une distance depuis un centre de gravité du satellite jusqu'au premier groupe de propulseurs (115), la seconde distance étant une distance dans une seconde direction opposée à la première direction et étant une distance depuis le centre de gravité du satellite jusqu'au second groupe de propulseurs (125).

7. Procédé de propulsion de satellite selon la revendication 6,
dans lequel, quand le premier nombre opérationnel et le second nombre opérationnel sont identiques, la première distance et la seconde distance sont égales, et
dans lequel, quand une transition est réalisée depuis un état d'équilibre dans lequel le premier nombre opérationnel et le second nombre opérationnel sont identiques jusqu'à un état de déséquilibre dans lequel le premier nombre opérationnel et le second nombre opérationnel sont différents, au moins une distance parmi la première distance et la seconde distance change de sorte que le rapport entre la première distance et la seconde distance devient un rapport inverse du rapport entre le premier nombre opérationnel et le second nombre opérationnel.

8. Procédé de propulsion de satellite selon la revendication 7,
dans lequel, quand une transition est réalisée depuis l'état de déséquilibre à l'état d'équilibre, au moins une distance parmi la première distance et la seconde distance change de sorte que la première distance et la seconde distance deviennent égales.
